# EUROPEAN PATENT APPLICATION

(11) **EP 2 011 594 A2**
(43) Date of publication of application: **07.01.2009**
(21) Application number: 08159649.6
(22) Date of filing: 03.07.2008
(51) Int. Cl.: B23D 45/16, B23D 47/12, B28D 1/04

(54) **Power cutter**

(30) Priority: 04.07.2007 GB 0712934
(71) Applicant: Black & Decker Inc., Newark, Delaware 19711 (US)
(72) Inventor: Droste, Manfred, 65555 Limburg-Offheim (DE); Soika, Martin, 65510 Idstein (DE)
(74) Representative: Bell, Ian Stephen

(57) **Abstract**

A power cutter comprising: a housing 2; an engine 24 mounted within the housing 2; a support arm 7 mounted on the housing and which projects forward of the housing; a blade mounting mechanism rotatably mounted on the end of the support arm and which is capable of being rotationally driven by the engine 24 when the engine is running; a cutting blade having a circular central hole and which mounts on and is rotationally driven by the blade mounting mechanism; a liquid fuel aeration mechanism 126 to generate aerated fuel for the engine; an air intake 314 for the provision of air for the liquid fuel aeration device 126; an air filtration mechanism 316 to filter the air drawn in from the air intake for the liquid fuel aeration mechanism; a fuel tank 124 for providing fuel to the liquid fuel aeration mechanism; and an exhaust 146 through which the exhaust gases generated by the operation of the engine are expelled; wherein the blade mounting mechanism comprises: a spindle 70 rotatably mounted on the support arm and which is capable of being driven by the engine 24, an adaptor 90 upon which is mounted the cutting blade, which adaptor is mounted on surrounds the spindle, the adaptor 90 having along its length a plurality of radial support surfaces 98; 100 which are each concentric with the spindle 70, each having a different radius; a clamping mechanism 96, 92,86 capable of axially and angularly locking the cutting blade to the spindle 70; wherein, when the blade 10 is mounted on the adaptor 90, the central hole of the blade 10 mounts on a corresponding sized radial support surface 98; 100 of the adaptor 90 so that the axis of rotation of the blade 10 is substantially co-axial with that of the spindle 70.

## Description

The present invention relates to a power cutter.

A typical power cutter comprises a housing in which is mounted a two stroke internal combustion engine. Attached to the side of the housing is a support arm which extends forward of the housing. Rotatably mounted on the end of the support arm is a cutting blade, usually in the form of a grinding disk. The motor is drivingly connected to the cutting blade via a drive belt. The rotary output of the engine rotatingly drives the cutting blade via the drive belt. The drive belt is driven via a centrifugal clutch which enables the out drive spindle of the engine to disengage from the belt when the engine is running at a slow speed, to allow the engine to continue running, whilst disengaging any drive to the cutting blade to allow the blade to be stationary.

Also mounted in the housing is a petrol tank which provides petrol for the engine and an oil tank, which provides lubricating oil to mix with the petrol, to lubricate the engine, to provide a petrol/oil mixture. The petrol and oil mixture is fed into the engine via a carburetor, also mounted within the housing, which creates an aerated petrol/oil mixture, to power the engine.

Mounted on the rear of the housing is a rear handle for supporting the power cutter, which contains a trigger switch for accelerating the engine upon depressing. Depression of the trigger switch causes more of the aerated petrol/oil mixture to be injected into the engine from the carburetor which in turn causes the speed of the engine to accelerate.

GB2232913, W02005/056225 and US5177871 show such power cutters.

Cutting blades for use with power cutter are made from a flat sheet of material, typically metal, and have a circular outer circumference. The circular outer edge comprises either teeth or other cutting elements, such as diamonds, to form a radial cutting edge. A circular central hole is formed at the centre of the blade which is used to mount the blade onto a drive spindle. The size of the diameter of cutting blades vary. However, as the size of the outer diameter increases, the size of the diameter of the central hole in the middle of the blade also increases. It is desirable for a power cutter to be able to use a range of sizes of cutting blades with varying sizes of central hole. In order for it to do so, it needs to be able mount blades having differing sized central holes. The present invention provides a power cutter which is able to do so.

A power cutter comprising:
a housing;
an engine mounted within the housing;
a support arm mounted on the housing and which projects forward of the housing;
a blade mounting mechanism rotatably mounted on the end of the support arm and which is capable of being rotationally driven by the engine when the engine is running;
a cutting blade having a circular central hole and which mounts on and is rotationally driven by the blade mounting mechanism;
a liquid fuel aeration mechanism to generate aerated fuel for the engine;
an air intake for the provision of air for the liquid fuel aeration device;
an air filtration mechanism to filter the air drawn in from the air intake for the liquid fuel aeration mechanism;
a fuel tank for providing fuel to the liquid fuel aeration mechanism; and
an exhaust through which the exhaust gases generated by the operation of the engine are expelled;
wherein the blade mounting mechanism comprises:
   a spindle rotatably mounted on the support arm and which is capable of being driven by the engine,
   an adaptor upon which is mounted the cutting blade, which adaptor is mounted on surrounds the spindle, the adaptor 90 having along its length a plurality of radial support surfaces which are each concentric with the spindle 70, each having a different radius;
   a clamping mechanism capable of axially and angularly locking the cutting blade to the spindle;
   wherein, when the blade is mounted on the adaptor, the central hole of the blade mounts on a corresponding sized radial support surface of the adaptor so that the axis of rotation of the blade is substantially co-axial with that of the spindle.

Two embodiments of the invention will now be described with reference to accompanying drawings of which:
Figure 1 shows a perspective view of the power cutter from a first side;
Figure 2 shows a side view of the power cutter from a second side;
Figure 3 shows a sketch of a horizontal cross section of the belt drive and support arm;
Figure 4 shows a sketch of the forward and rearward sections of the support arm;
Figure 5 shows a sketch of a horizontal cross sectional view of the connection between the rearward and forward sections of the support arm;
Figure 6 shows the belt tensioner;
Figure 7 shows a computerized drawing of the forward section, driven wheel, blade and blade guard;

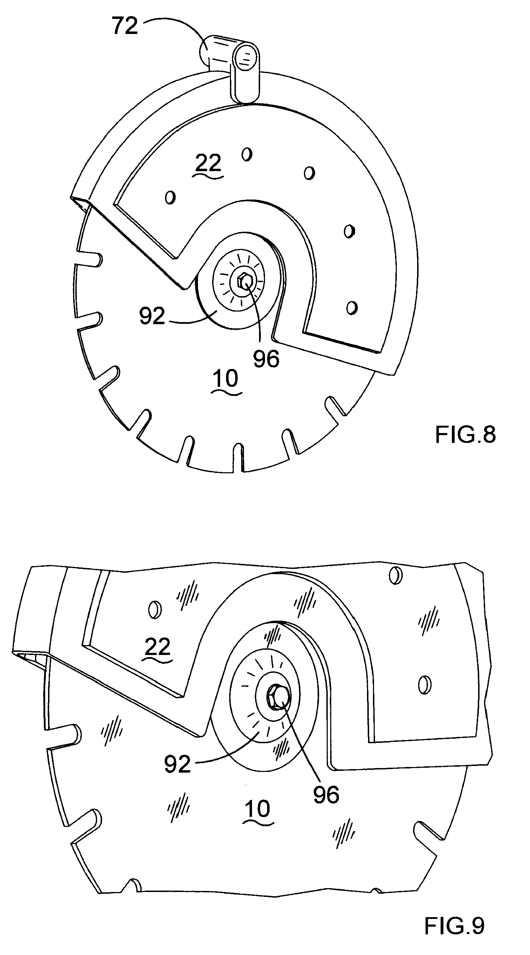

Figure 8 shows a computerized drawing of the blade and blade guard from the opposite direction to that shown in Figure 7;
Figure 9 shows a computerized drawing of a close up the blade and blade guard;
Figure 10 shows a computerized drawing of a close up the blade and blade guard without the holding nut;
Figure 11 shows a computerized drawing of a close up the blade and blade guard without the first support disk;
Figure 12 shows a computerized drawing of forward support with the blade guard;
Figure 13 shows a computerized drawing of a cut away view of the rotary support mechanism from the side with the adapter in the first position;
Figures 14 and 15 show computerized drawings of a cut away views of the rotary support mechanism from the side with the adapter in the second position;
Figure 16 shows a cut away view of the blade support;
Figure 17 shows a computerized drawing of a cut away view of the rotary support mechanism from a first perspective;
Figure 18 shows a computerized drawing of a cut away view of the rotary support mechanism from a second perspective;
Figure 19 shows a sketch of the vertical cross section of the body of a power cutter;
Figure 20 shows a perspective view of the fuel cap;
Figure 21 shows an exploded view of the fuel cap from a first side;
Figure 22 shows an exploded view from a second side;
Figure 23 shows a sketch of a vertical cross section of the part of the power cutter with the air filter;
Figure 24 shows a computer generated drawing of the filter;
Figures 25 and 26 show sketches of the cleaning action of the filter;
Figures 27 to 29 show more computer generated drawings of the filter; and
Figure 30 shows a second embodiment of an air filtration system.

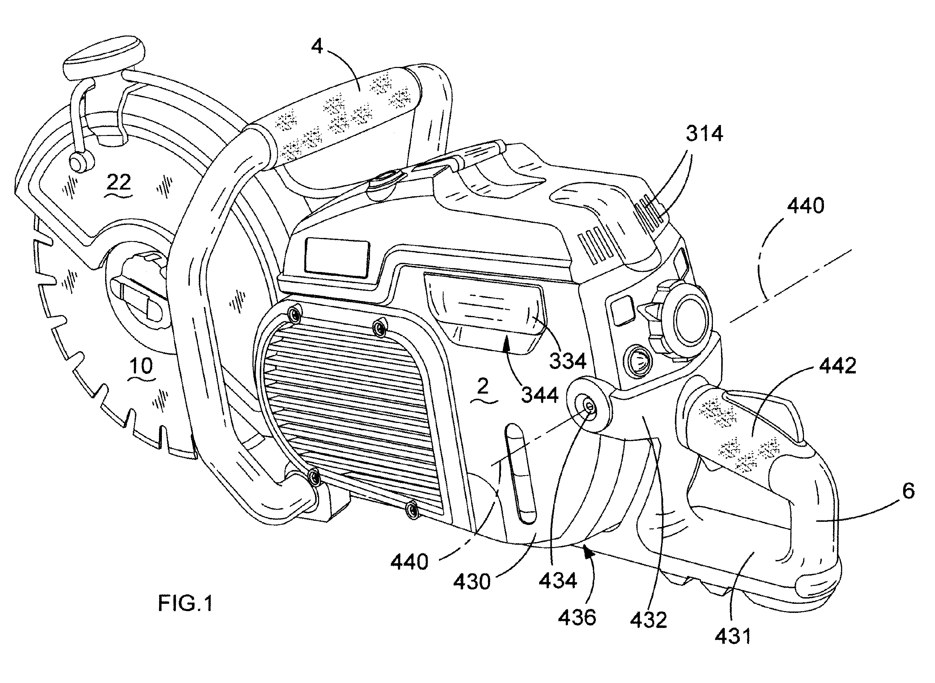

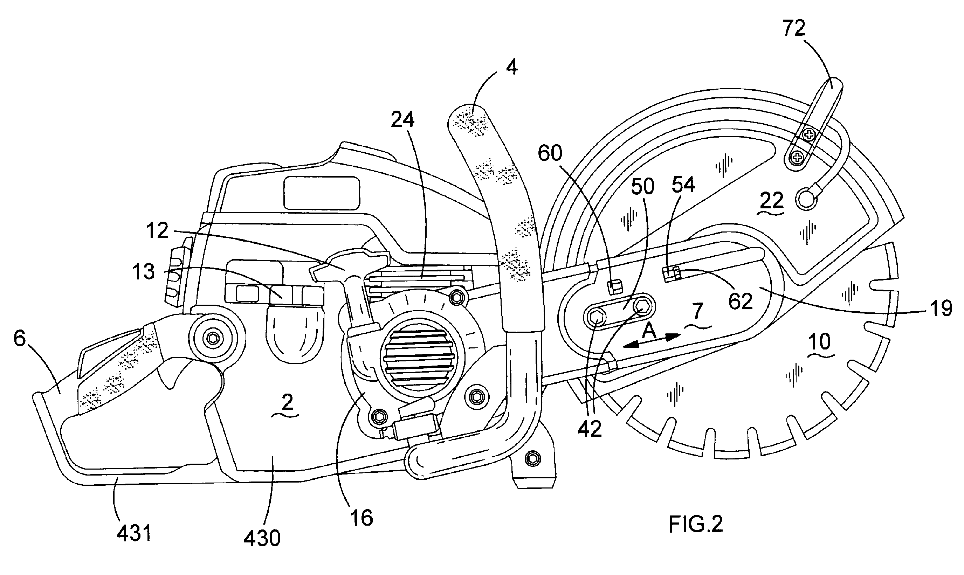

Referring to Figures 1 and 2, the power cutter comprises a body 2 in which is mounted a two stroke internal combustion engine 24, a front handle 4, a rear handle 6, a support arm 7, a cutting blade 10, rotatably mounted on the support arm 7 and driven by the engine 24 via a rubber belt 26 and a blade guard 22. A starter 12 is provided to activate the engine 24. A plastic cover 19 covers the out side of the support arm 7 as shown in Figure 2.

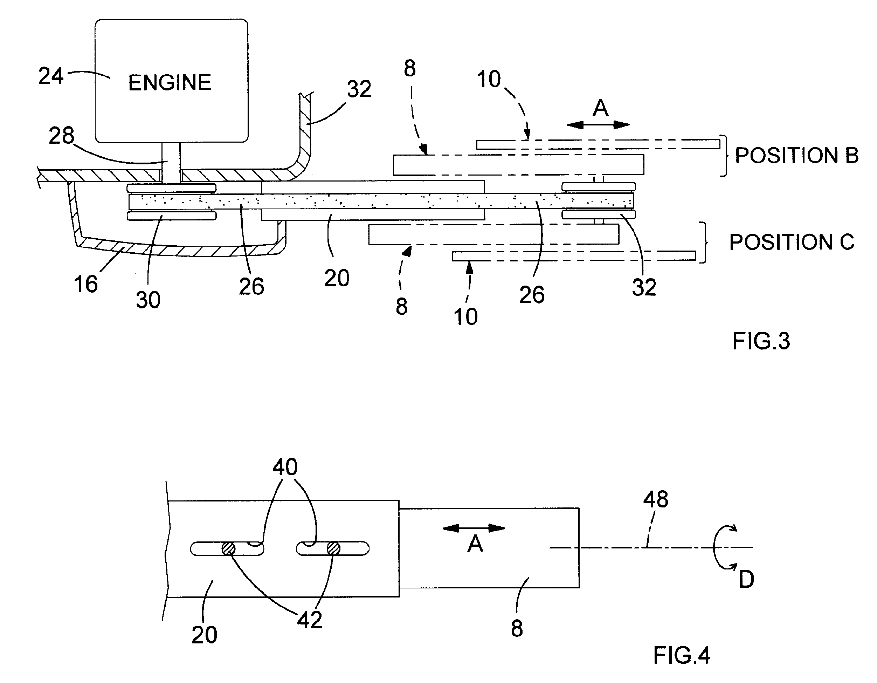

Referring to Figure 3, the support arm 7 comprises two sections, a forward section 8 and a rearward section 20. The rearward section 20 is made from cast iron and is rigidly attached to the side of the gear housing 32 using bolts (not shown). The forward section 8 is made of cast iron and is slideably mounted on the rearward section 20. The forward section can slide in the direction of Arrow A. The method by which the forward section 8 is slideably mounted on the rearward section 20 is described in more detail below.

The engine 24 has an output shaft 28 on which is mounted a drive wheel 30 for the rubber belt 26. The output shaft drives the drive wheel 30 via a centrifugal clutch (not shown) in well known manner. A driven wheel 32 is rotatably mounted on the end of the forward section 8 of the support arm. The driven wheel 32 is connected to the cutting blade 10 which is also mounted on the forward section 8 as described below. The belt 26 passes around the rearward section 20, between the two wheels 30, 32 to transmit the rotation of the engine to the cutting blade 10. The purpose of enabling the forward section 8 to slide in relation to the rearward section 20 is to enable the belt 26 to be tensioned as described below. A hub 16 covers the drive wheel 30.

The Interconnection between rearward and forward sections of the support arm 7 will now be described with reference to Figures 3, 4, 5 and 6.

Referring to Figures 3 and 4, the rearward section 20 comprises two elongate slots 40 formed through the width of the rearward section 20. The elongate slots 40 are aligned with each other, are of equal length and run lengthways along rearward section 20 of the support arm. Formed through the forward section 8 are two corresponding holes 46. The part of the forward section 8 with the holes 46 is located alongside of the part of the rear section 20 with the elongate slots 40 so that the holes 46 align with a corresponding slot 40. A bolt 42 passes through each hole 46 and corresponding slot 40. A nut 44 is screwed onto the bolt 42 to sandwich the rearward and forward sections together and hold them in place using friction. The slots 40 enable the bolts 42, and hence the forward section 8, to slide relative to the rearward section 20.

In order to slide the rearward section 20 relative to the forward section 8, the nuts 44 are slackened so that the two can move relative to each other. The forward section 8 is then slid (using the belt tensioner described below) to the desired position, and then the nuts 44 are tightened to sandwich the rearward section 20 to the forward section 8 to prevent movement between the two.

The forward and rearward interconnection mechanism is designed so that the forward section 8 can be located on either side of the rearward section 20 as shown in Figure 2. In normal operation, the forward section 8 is located on the same side of the rearward section 20 as the engine 24. This is indicated as position B. In this position, the cutting blade 10 is located closer to the central axis of the power cutter. However, it is sometimes desirable to have the cutting blade located towards the edge of the body 2 to enable it to cut near to a wall. The forward section 8 can then be moved to the other side of the rearward section 20 and be rotated through 180 degrees about the longitudinal axis 48 of the forward section 8 as indicated by Arrow D to the position C. In both orientations, the driven wheel 32 locates in the same position so that it can be driven by the belt 26.

The belt tensioner will now be described with reference to Figures 4, 5 and 6

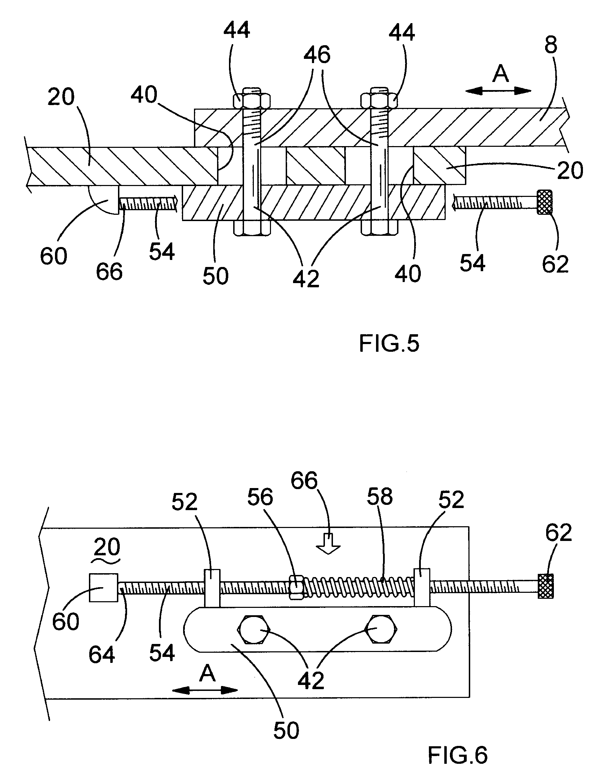

Referring to Figures 5 and 6, the belt tensioner comprises a metal plate 50 having two holes 46 through which the bolts 42 pass as seen in Figure 4. The position of the plate 50 is fixed by the position of the bolts 42. Formed on the metal plate 50 are two hoops 52 which form apertures which are aligned. The shaft of an elongate bolt 54 passes through the hoops 52. The elongate bolt 54 can freely rotate and axially slide within the hoops 52. Threadedly mounted onto the bolt 54 is a nut 56. A spring 58 is sandwiched between the nut 56 and one of the hoops 52. The spring 58 prevents the nut from rotating. Therefore, as the bolt 54 is rotated, the nut 56 travels along the length of the bolt 54 in a direction dependent on the direction of rotation of the bolt 54. The position of the nut 56 is fixed relative to the hoop 52 by the spring 58. A stop 60 is integrally formed on the rearward section 20 of the supporting arm.

In order to tension the belt 26, the elongate bolt is rotated so that the nut moves towards the head 62 of the bolt 54. As its position is fixed by the spring 58, the nut remains stationary relative to the hoop 52 causing the bolt 54 to axially move within the hoops 52 so that the end 64 of the bolt 54 approaches the stop 60. Upon engagement of the stop 60, the end 64 and hence the bolt 54, can not move further and therefore the nut begins to move. The movement of the nut causes the spring 58 and hence the hoop 52 to move towards the head 62 of the elongate bolt 54. This in turn results in the plate 50, the two bolts 42 and the forward section 8 to move with the nut 56, the bolts 42 sliding within the two slots 40. However, when the belt 26 becomes tight, the forward section 8, and hence the bolts 42 and plate 50 are prevented from moving further. However, if the elongate nut 54 is further rotated, the nut 56 will continue to travel along its length. Therefore, the spring 58 becomes compressed, applying a force onto the hoop, and hence plate 50, which in turn transfers it to the forward section 8. This tensions the belt 26. The more compression of the spring 58, the more force is applied to the belt 26. An indicator 66 is added to the plate 50 to show when the amount of the compression of the spring 58 is sufficient to apply the correct amount of force to the belt 26.

The blade mount on the forward section 8 will now be described.

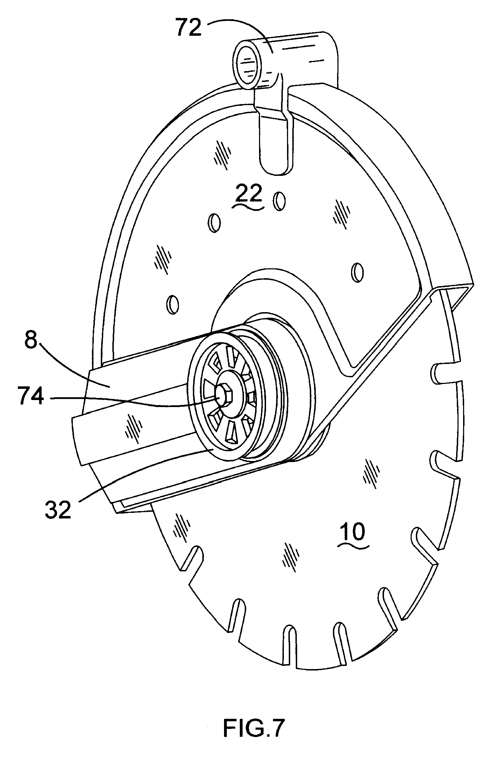

Referring to Figure 7, the driven wheel 32 is rotatably mounted on the forward section 8. The driven wheel 32 is drivingly connected to the cutting blade 10 via a spindle 70 as will be described in more detail below. The blade guard 22 is pivotally mounted around the spindle 70 as will be described in more detail below. A grasp 72 is rigidly attached to the blade guard 22 which can held by an operator in order to pivot the blade guard 22.

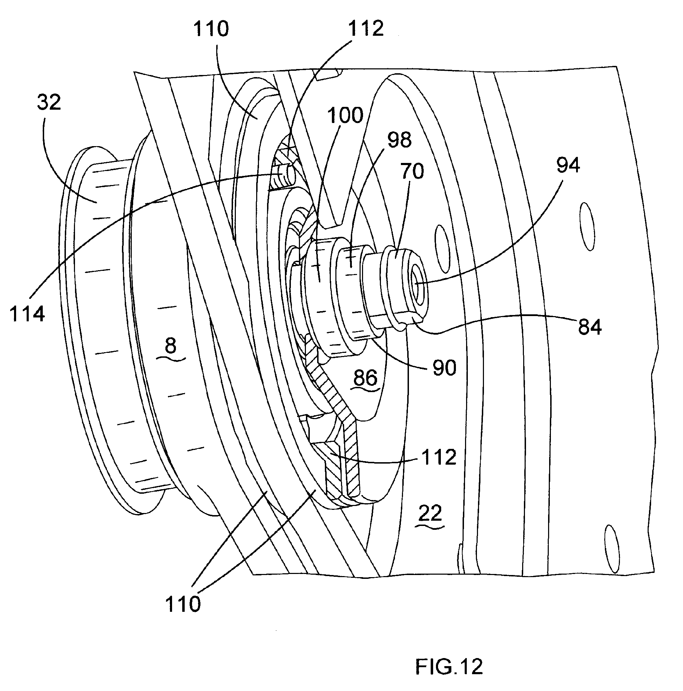

Figures 12 to 18 show the mechanism by which the forward support 8 rotatably supports the cutting blade 10.

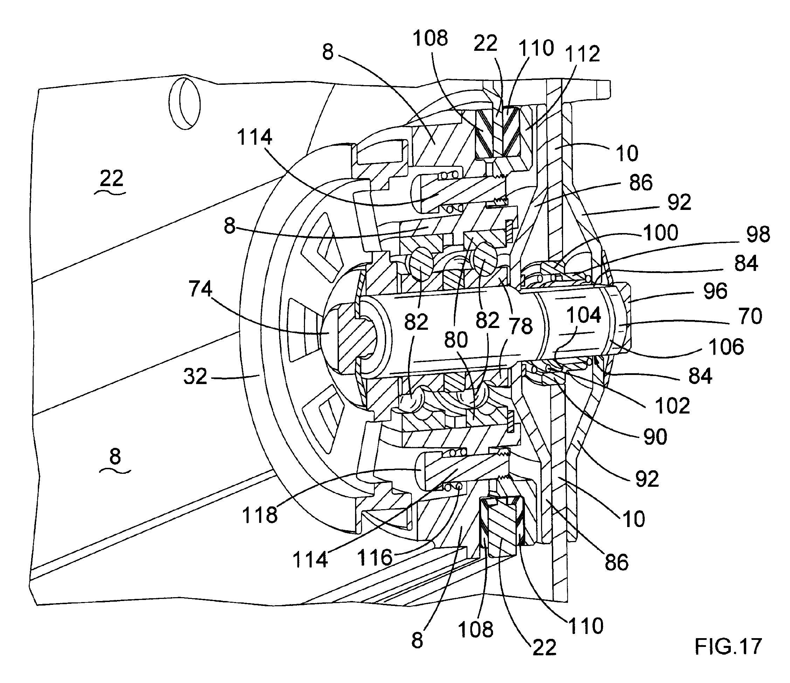

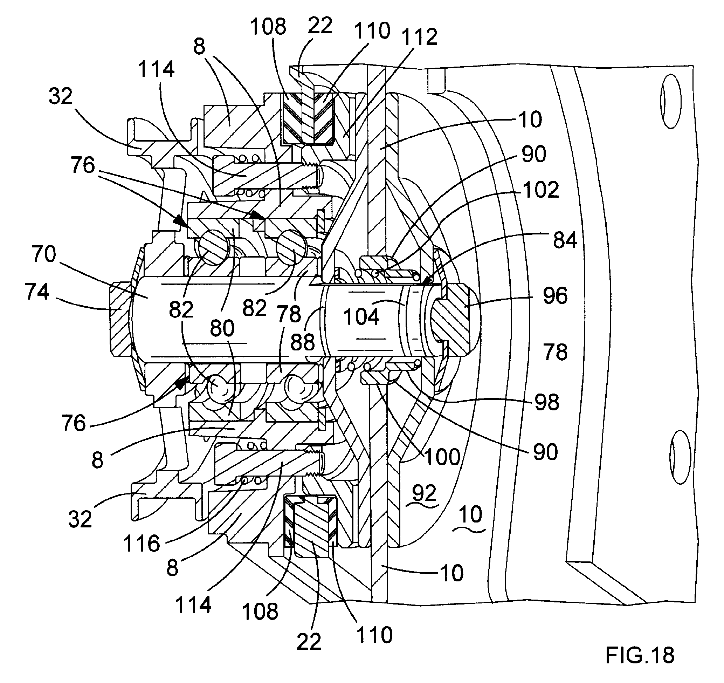

Referring to Figures 17 and 18, the driven wheel 32 is rigidly attached to the spindle 70 via a flanged nut 74. Rotation of the driven wheel 32 results in rotation of the spindle 70. The spindle 70 is mounted in the forward section 8 using two ball bearing races 76, each comprising an inner track 78 rigidly connected to the spindle 70, an outer track 80 rigidly connected to the forward support 8, and a set of ball bearings 82 sandwiched between the two tracks 78, 80 which allow the outer track 80 to rotate relative to the inner track 78.

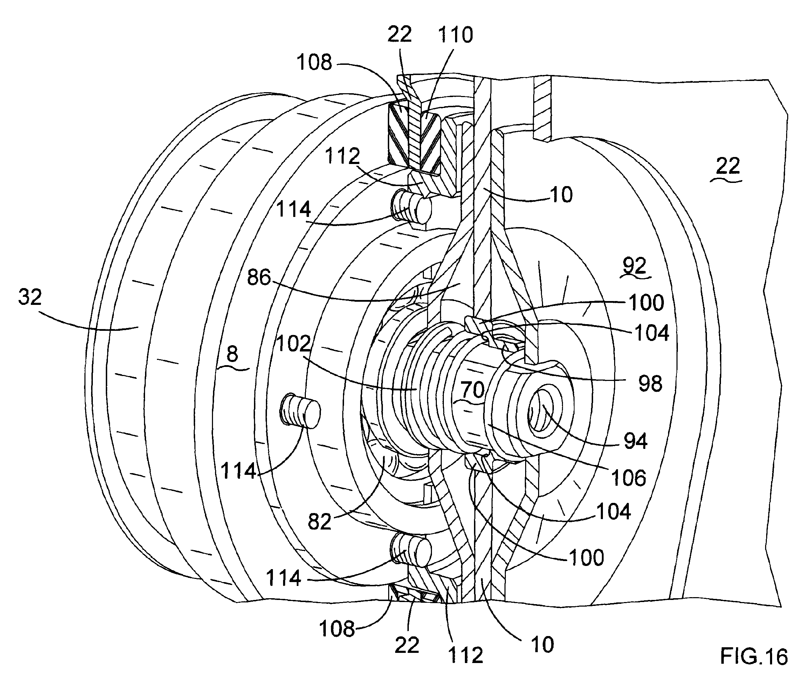

Formed along a part of the length of the spindle 70 are two flat surfaces 84 (see Figure 16). A second support disk 86 comprises a central hole which is predominantly circular with the same diameter of the spindle 70, but with two flat sides which correspond in dimensions to the flat surfaces 84 of the spindle 70. The second support disk 86 is mounted on the end of the spindle 70 and abuts against shoulders 88 on the spindle 70 formed by the two flat surfaces 84. The flat surfaces 84 ensure that the second support disk is rotationally fixed to the spindle 70 so that rotation of the spindle 70 results in rotation of the second support disk 86.

An adaptor 90 (described in more detail below) is mounted on the spindle 70. The adaptor can freely rotate about the spindle 70. The cutting blade 10 is mounted on the adaptor 90.

A first support disk 92 comprises a central hole which is predominantly circular with the same diameter of the spindle 70, but with two flat sides which correspond in dimensions to the flat surfaces 84 of the spindle 70. The first support disk 92 is mounted on the end of the spindle 70 and abuts against the cutting blade 10. The flat surfaces 84 ensure that the first support disk 92 is rotationally fixed to the spindle 70 so that rotation of the spindle 70 results in rotation of the first support disk 86.

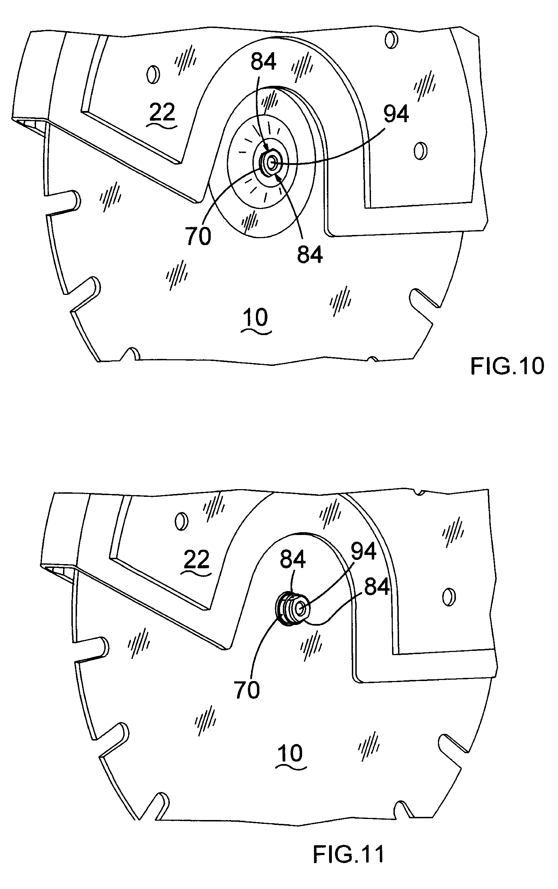

A threaded hole 94 is formed in the end of the spindle 70 (see Figures 10 to 12). A second flanged nut 96 is screwed into the hole 94. The flange of the nut 96 pushes the first support disk 92 against the blade 10 which in turn pushes the blade 10 against the second support disk 86. The blade 10 becomes sandwiched between the two support disks 86, 92. Rotation of the support disks 86, 92 by the spindle 70 results in rotation of the blade due to the frictional contact of the blade 10 being sandwiched between the two disks 86, 92. By frictionally driving the blade 10, it allows rotational movement of the blade 10 relative to the spindle 70 if the blade becomes snagged during the operation of the power cutter.

The automatic blade support adjustment mechanism will now be described.

Cutting blades of different sizes can be used. Different sized cutting blades 10 have different sized holes in their centres through which the spindle 70 passes. It is intended that the present power cutter will be able to fit cutting blades 10 having two different sizes of hole through their centres. This is achieved by the use of the adaptor 90.

Referring to Figures 17 and 18, the adaptor is mounted on the spindle 70 between the two support disks 86, 92. As well as being freely rotatable about the spindle 70, the adaptor 90 can axially slide along the spindle 70 between the disks 86,92.

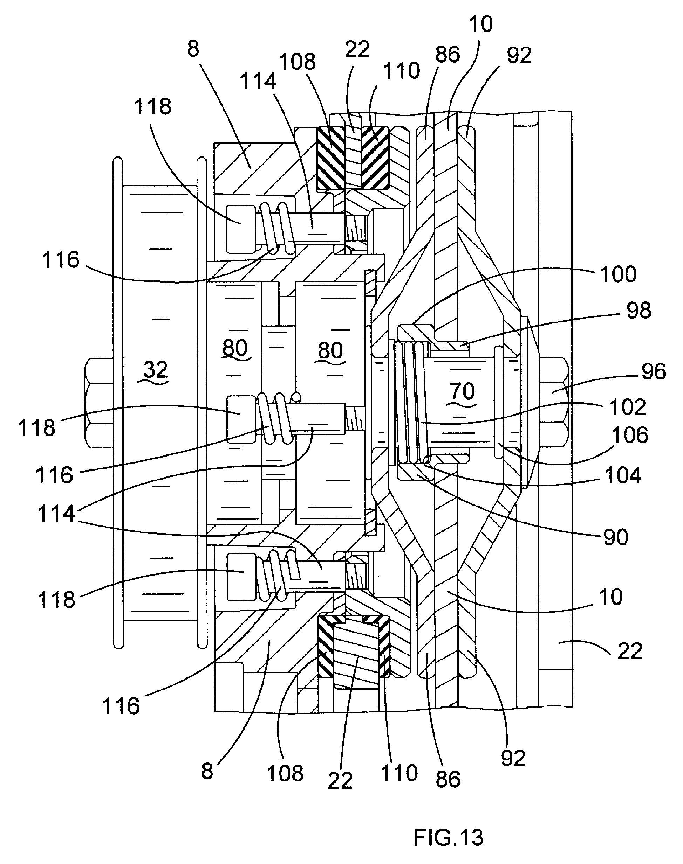

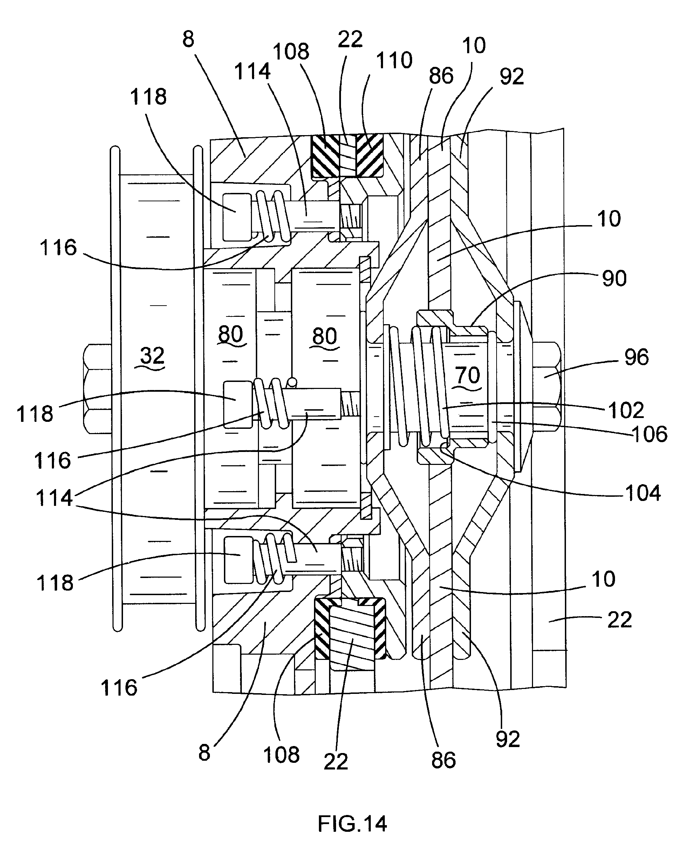

The adaptor comprises a front section 98 and a rear section 100. The front section 98 has a first outer diameter, the rear section 100 has a second larger outer diameter. The two sections allow blades 10 with holes of different diameters to be mounted onto the spindle 70. In figures 14 to 18, it can be seen that a blade 10 with a central hole of a first diameter is mounted on the rear section 100 of the adaptor 90. In figure 13, it can be seen that a blade 10 with a central hole of a second diameter is mounted on the front section 98 of the adaptor 90.

A spring 102 is sandwiched between the second support disk 86 and an inner shoulder 104 of the adaptor 90. The spring 102 biases the adaptor towards the first support disk 92. A circlip 106 is located around the spindle 70 which limits the maximum extent of axial travel of the adaptor 90. When the adaptor 90 is allowed to slide to its maximum extent and abut against the circlip 106, the rear section 100 is located centrally between the support disks 86, 92.

When a blade 10, having a centre hole with the same diameter of the rear section 100 of the adaptor is mounted onto the adapter, it fits onto the rear section 100 of the adaptor as shown in Figure 14 to 18. As such, the blade 10 is centrally located between the two support disks 86. 92. However, when a blade 10, having a centre hole with the same diameter of the front section 98 of the adaptor is mounted onto the adapter, it fits onto the front section 98 of the adaptor as shown in Figure 13. It is prevented from sliding onto the rear section. In order for the blade 10 to be secured onto the spindle 70 by the support disks 86, 92, it must be located centrally between the two. When the first support disk 92 is mounted onto the spindle 70 after the blade, it pushes the blade 10 and adaptor 90 against the biasing force of the spring 102, moving the adaptor 90 towards the second support disk 86 as shown in Figure 13. When the blade is securely mounted on the spindle 70, it is centrally located between the support disks. The front section is similarly mounted centrally. The adaptor enables two types of blade 10 to be used, it moving automatically in accordance with blade size.

The pivotal blade guard 22 will now be described.

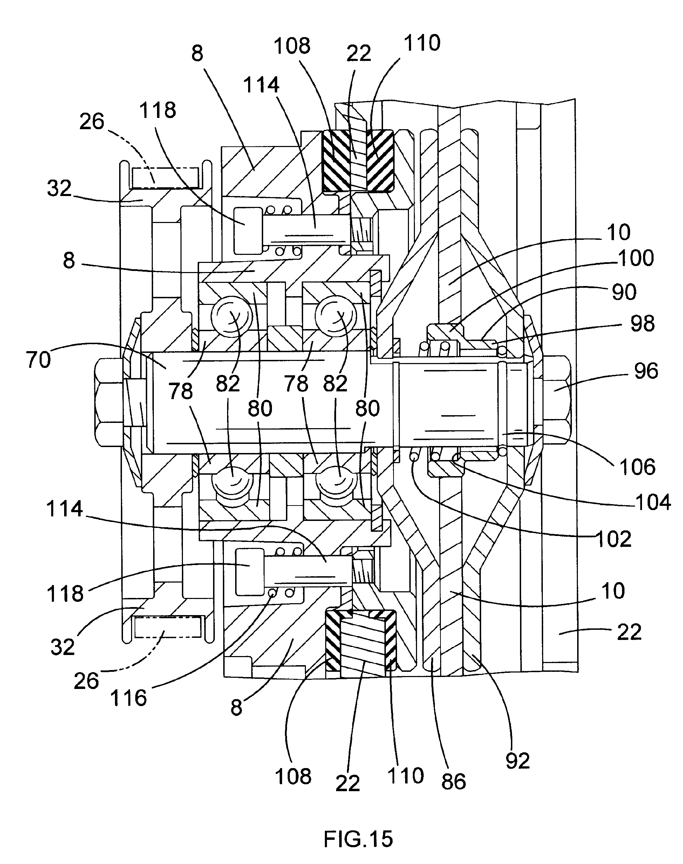

Referring to Figure 15, the blade guard 22 is held by being sandwiched between two pieces of rubber 108, 110. The blade guard 22 can pivot about the spindle 70. However, it is frictionally held by the two pieces of rubber 108, 110. In order to pivot the guard 22, the operator must overcome the friction between the guard 22 and the rubber 108, 110.

A metal bracket 112 is attached to the forward section 8 via four bolts 114. The bolts pass freely through the forward section 8 and threadedly engage with threaded holes formed in the bracket 112. A helical spring 116 is sandwiched between the head 118 of each bolt 114 and the forward section 8, biasing the bolts 114 out of the holes, pulling the bracket 112 towards the forward section. Sandwiched between the bracket and the forward section 8 is a first piece of rubber, 108, the guard 22, a second piece of rubber 110 to form a rubber - guard - rubber sandwich. The strength of the spring 116 determines the amount of frictional force there is between the rubber 108, 110 and the guard.

In order to pivot the guard the operator holds the grasp 72 and pivots the guard 22 by over coming the frictional force between the guard and the rubber 108, 110.

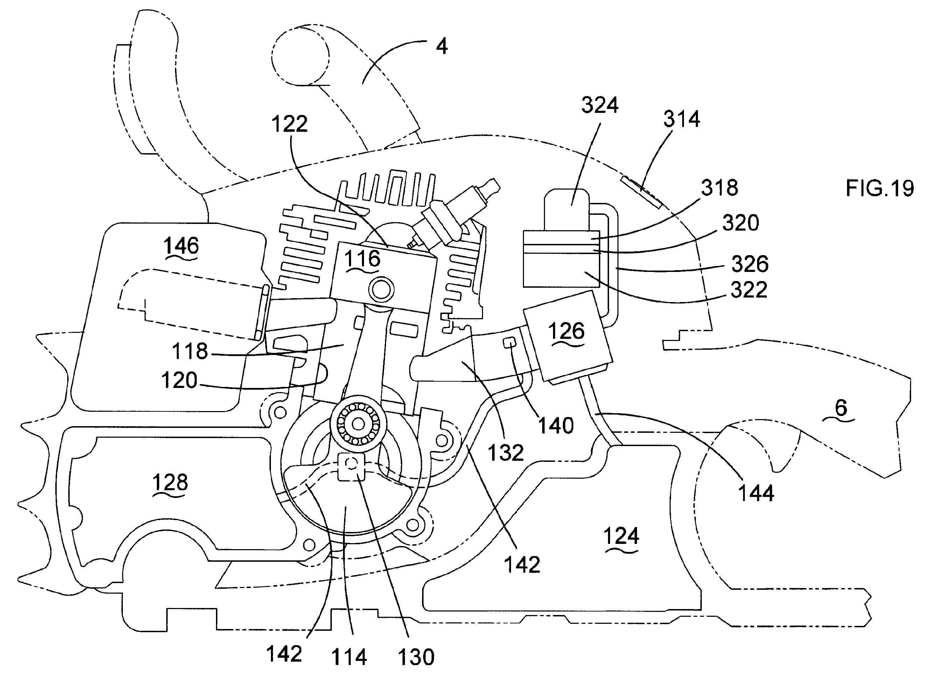

The oil and petrol management system will now be described with reference to Figure 19.

The internal combustion engine is fed with fuel from a carburetor 126. The engine burns the fuel in well known manner to generate rotary motion of its crank shaft 114, which connects to the output shaft 28. The exhaust gases are then expelled from the engine 24 through an exhaust 146 to the surrounding atmosphere.

The power cutter will comprise a petrol tank 124 in which is located petrol for driving the two stroke internal combustion engine 24. Petrol will pass from the tank 124 via passageway generally indicated by dashed lines 144 through the carburetor 126 which will mix it with air prior to being forwarded to the cylinder 118 where it will be burnt. Detail of the supply of air, including its filtration will be described in more detail below. A second tank 128 will also be mounted in the body 2 as shown in which lubricating oil will be contained. The oil will be pumped out of the tank 128 via an oil pump 130, which is mounted on the crank shaft housing which will be driven via a gear arrangement (not shown) from the crank shaft 114. The oil pump 130, will pump the oil from the oil tank 128 via the pump 130 into the passageway 132 between the carburetor 126 and the cylinder 120, through the passageways indicated by dashed lines 142, and then mixing the oil with the air/petrol mixture generated by the carburetor 126. It will inject oil at the ratio 1:50 in relation to the petrol. A sensor 140 will be mounted within the passageway 132 between the carburetor 126 and cylinder 120. The sensor will determine whether oil is being pumped correctly in to the passageway 132 either by checking the pressure of the oil as it enters the passageway 132 or by detecting the presence of oil in the passageway 132. The construction of such sensors are well known and therefore will not be described in any further detail. The engine will be controlled by an electronic ignition system. The sensor 140 will provide signals to the electronic ignition system about the oil being pumped into the passageway 132. In the event that insufficient or no oil is pumped into the passageway due to the fact that the oil tank is empty or there is a blockage in an oil pipe 142, the sensor 140 will send the signal to the ignition system. The ignition system will then either put the engine into an idle mode or switch the engine off entirely, depending on the settings of the ignition system. This will ensure that lubricating oil is always added to the petrol in the correct amount prior to combustion within the two stroke engine.

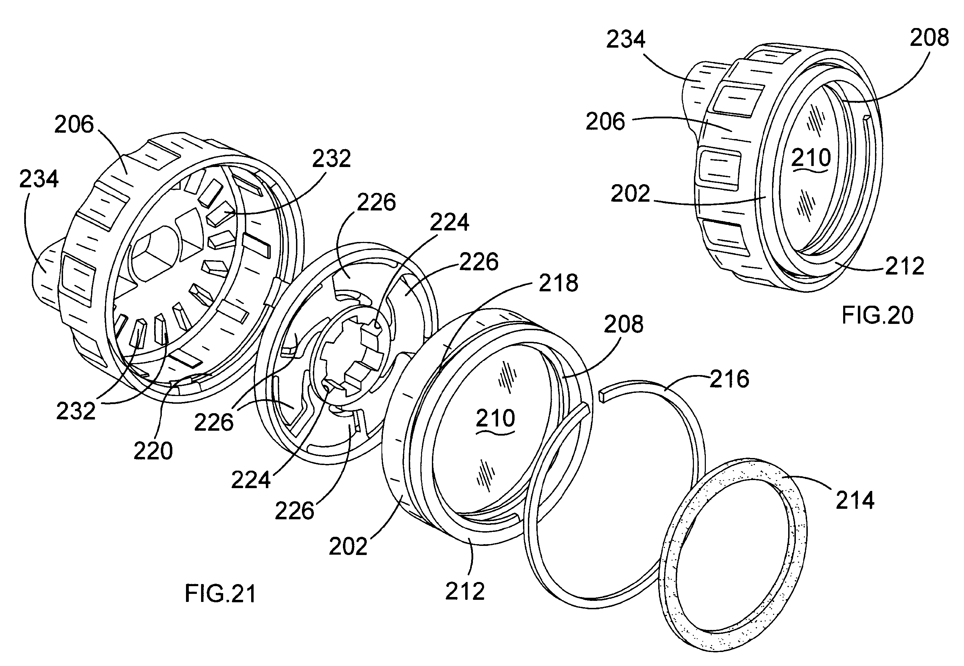

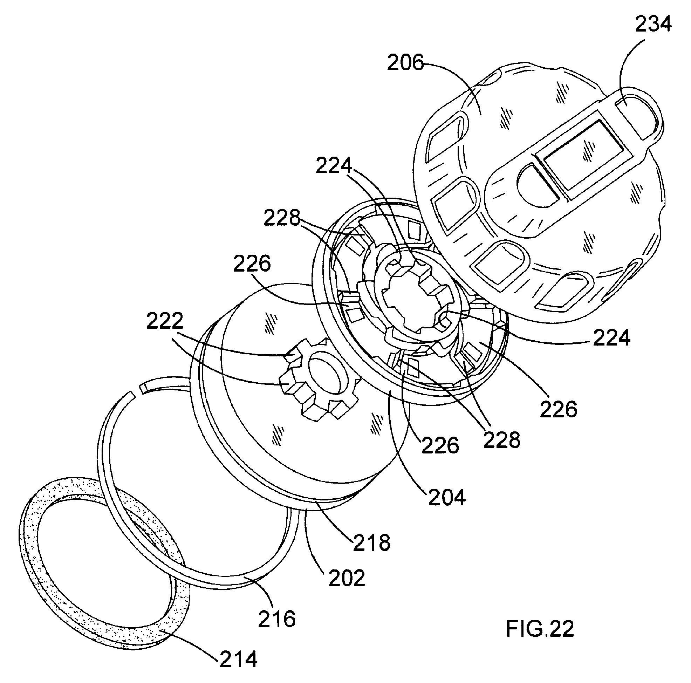

The construction of the fuel cap will now be described with reference to Figures 20 to 23.

The petrol tank 124 will be mounted within the body of the unit as generally indicated in Figure 19. The tank 124 will be sealed by a fuel cap 13 as shown on Figure 2.

The fuel cap will comprise an inner cap 202, a clutch 204 and an outer cap 206. The inner cap is of a tubular construction with one end 210 being sealed. Formed on the inside surface of a side wall 212 is a thread 208. When the fuel cap is screwed onto the fuel tank, the thread 208 slidingly engages with a thread formed around the external surface of the neck of the fuel tank 124.

Located inside the inner cap 202 adjacent the end 210 is a seal 214. When the fuel cap is screwed onto the fuel tank, the seal 214 ensures that no fuel can escape from the tank. The inner cap 2 locates within the outer cap 206. Sandwiched between the two is the clutch 204. A clip 216 locates within a groove 218 of the inner cap and also engages with an inner groove 220 formed within the outer cap. The clip holds the inner cap inside the outer cap whilst allowing it to freely rotate within the outer cap 206. The inner cap comprises a number of teeth 222 integrally formed with the inner cap. The teeth locate within corresponding slots 224 formed within the clutch, thus rotation of the inner cap causes rotation of the clutch 204. Formed on the clutch 204 are a plurality of resilient arms 226 mounted on the ends of which are pegs 228. The pegs 228 face towards the internal end wall 230 of the outer cap. Formed on the wall are a plurality of ridges 232. The pegs on the clutch are arranged to co-operate with the ridges 232 in the outer cap.

Rotation of the outer cap 206 causes the ridges 232 to engage with the pegs 228 resulting in rotation of the clutch 204, which in turn rotates the inner cap 202 via the teeth 222. When the fuel cap is screwed onto the fuel tank, the inner cap 202 threadingly engages with the neck of the fuel tank, the rotation of the inner cap 202 being caused by rotation of the outer cap 6 via an operator rotating it using a finger grip 234. When the seal 214 located within the inner cap engages with the end of the neck of the fuel tank, the inner cap 202 is prevented from further rotation. This in turn prevents further rotation of the clutch 204. However as the operator continues to exert a rotational force on the outer cap 206, the ridges 232 are caused to ride over the pegs 228, the movement of the pegs 228 being allowed by the resilient arms 226 upon which they are mounted. In this way the operator can rotate the outer cap whilst the inner cap remains stationary thus preventing the operator from over-tightening the fuel cap onto the neck of the fuel tank.

The air filtration mechanism for the carburettor 126 will now be described.

The two stroke engine comprises a carburetor 126 which mixes liquid fuel with air to generate a combustible mixture for powering the engine. However, due to the operation of the power cutter, a large amount of dust is generated which mixes with the surrounding air. This results in dust laden air. In order to ensure that the air entering the carburettor is free from dust it must pass through a filter system to remove the dust.

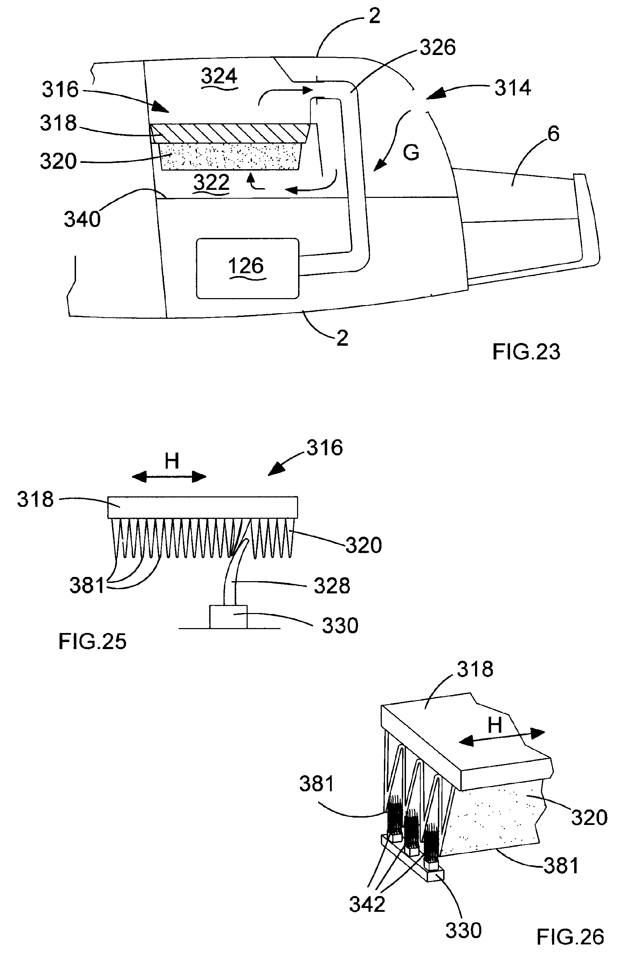

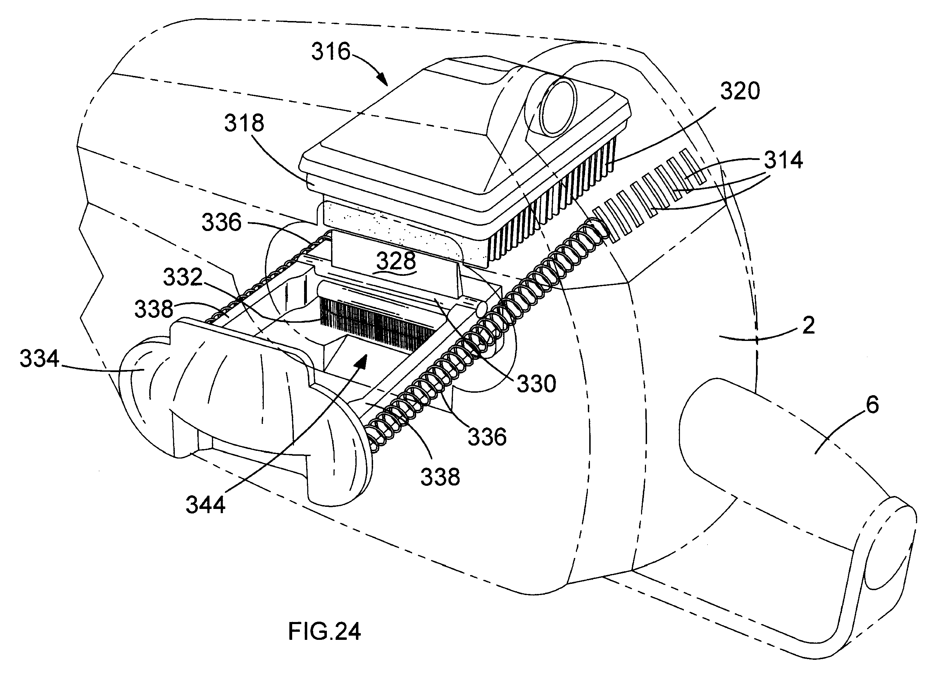

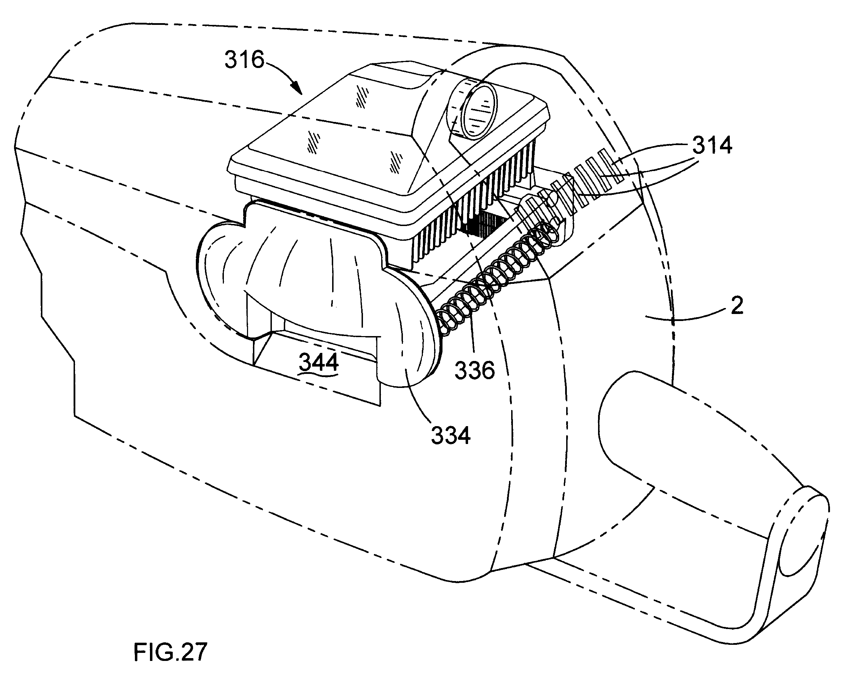

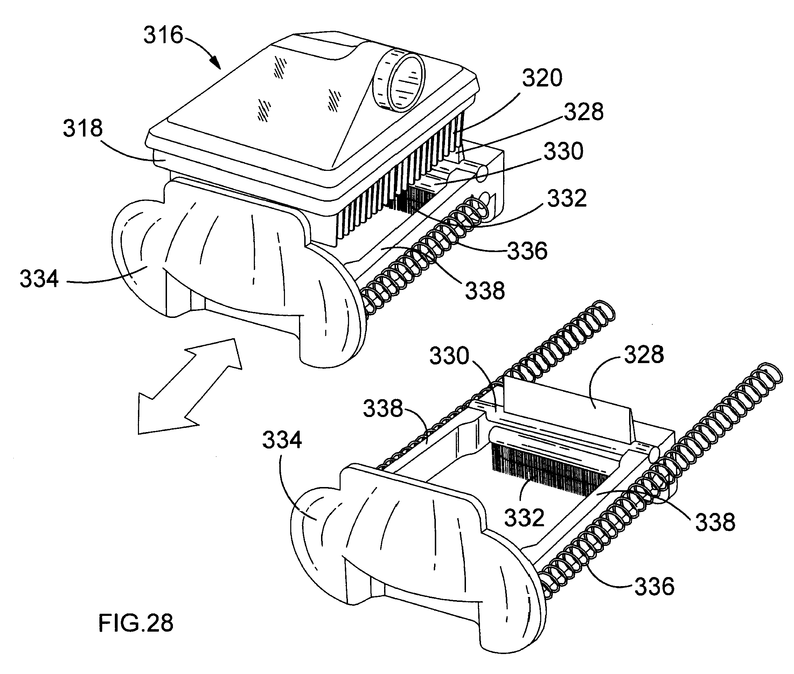

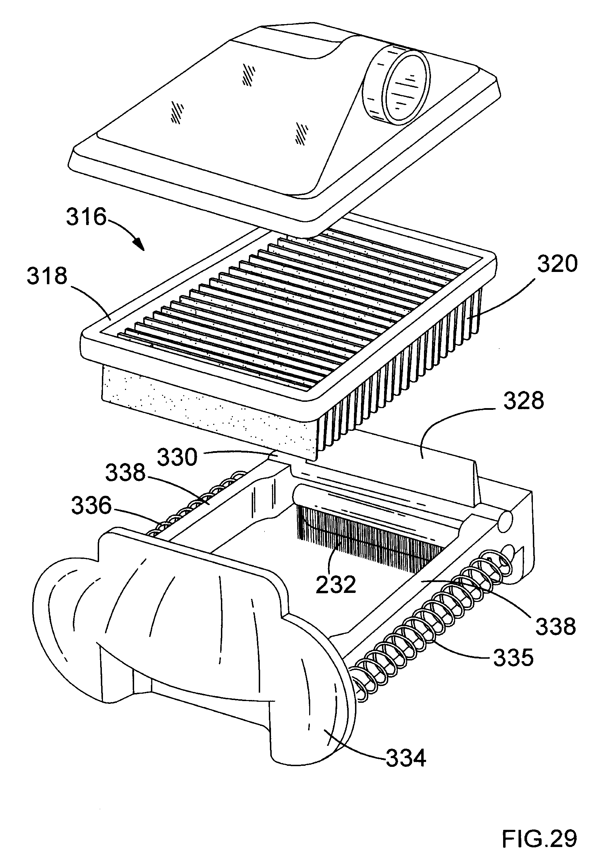

The filter system will now be described with reference to Figures 23 to 29.

Inside the body 2 is a filter unit 316 comprising a plastic base 318 and filter paper 320 folded to form pleats. The filter unit 316 is located within the body 2 so that the pleats 320 hang vertically downwards when the power cutter is in a storage position as shown in Figures 1 and 2.

Air will be sucked through the filter system by the carburetor 126. Air enters slots 314 on the rear of the body 2. Air passes (Arrow G) to a space 322 underneath the filter unit 316 and then passes through the filter paper 320 to a space 324 above the filter unit 316. Any dust entrained within the air is trapped by the filter unit 316 and held within the pleats of the filter paper 320.

The clean air then passes from the space 324, through a hose 326 to the carburetor 126 located below the space 322 below the filter unit 316.

In order to enable the operator to remove the dust trapped within the pleats of the filter paper 320, a cleaning device is provided. The cleaning device comprises a rubber flap 328, mounted on the top of a plastic base 330, a brush 332 attached to the bottom of the plastic base 330, a handle 334 attached to the plastic base 330 via to rigid arms 338. The base 330 can slide within the space 322 below the filter unit 316, widthways across the body 2. Movement is caused by the operator pulling the handle 334 away from the side of the body 2. Two springs 336 bias the handle 334 towards the side of the body 2.

In order to clean the filter unit, the operator pulls the handle 334, to move the base 330 across the width of the body 2 in the direction of Arrow H, and then releases it to allow it to return in the opposite direction under the biasing force of the springs 336.

As the base 330 slides across the width, the rubber flap 328 engage with the pleats 320, as best seen in Figure 25, knocking the dust of the pleats 320. The dust drops to the base 340 of the space 322 below the filter unit 316.

The brush 332 slidingly engages with the base 340 of the space 322. The brush 332 brushes the dust to one side or the other, depending on the direction of movement. An aperture 344 is formed on one side of the body 2. As the brush approaches the side of the body, it pushes the dust being swept along the base through the apertures, expelling it from the body 2.

Though Figure 4 shows the flap 28 moving perpendicularly to the direction of the pleats 320, it will be appreciated by a person skilled in the art that is possible to rotate the filter paper 320 so that the pleats run in parallel to the sliding movement of the flap 328 as shown in Figure 26. In such a scenario, the rubber flap 28 may be replaced by a plurality of brushes 342.

The construction of the rear handle will now be described with reference to Figures 1 and 2.

The body of the power cutter is constructed in the form of a plastic casing constructed from a number of plastic clamshell rigidly connected together. The rear clam shell 430 connects to the rear handle 6. In existing designs of power cutter, the rear handle 6 is integral with the rear clam shell 430. However, if the handle 6 is broken, the whole clam shell 430 needs to be replaced. As handle breakage is common it is desirable to avoid this.

Therefore, the rear handle 6 in the present invention is constructed as a separate item to that of the rear clam shell 430 (or body 2).

The rear handle 6 is constructed from a separate single clam shell 431 which is joined at its top 432 at two points 434 and at its bottom at a single point 436. Each of the three points 434, 436 is joined using a bolt which screws into the plastic clam shell 430. Vibration dampening material may be used in conjunction with the bolts to reduce the amount of vibration transferred to the handle 6 from the body 2. The use of such vibration dampening material allows limited movement of the handle 6 relative to the rear clam 430 at each of the three points. The movement could be either linear or rotational. One such construction is to surround the bolts with the dampening material in order to sandwich it between the bolts and parts of the clam shell of the rear handle 6.

The top 432 of the handle 6 is in the form of a cross bar. The shape is such that the bolts fastening the top 432 of the handle to the rear of the clam shell 430 are aligned with each other and thus provide a pivot axis 440 for the rear handle 6 about which it can rotate by a limited amount.

A person skilled in the art will appreciate that the handle may be constructed from a number of clam shell connect rigidly together. Rubber soft grip over mold 442 may also be added to the handle for additional comfort.

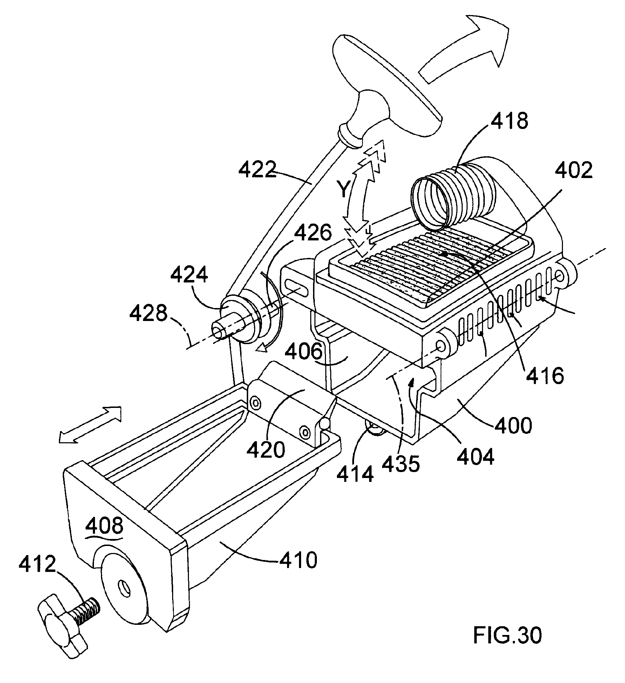

A second embodiment of an air filtration system will now be described with reference to Figure 30.

The filter device comprises a box 400 in which is mounted filter paper 402 which is pleated and which hangs down from the top section from inside the box. A space 404 is formed below the pleat. A large aperture 406 is formed in the side of the box below the filter paper and through which a drawer 408 can be slid. The drawer comprises a receptacle 410 which locates in the space 404 immediately below the filter paper 402. The drawer 408 can be fastened into place via a screw 412 which threadedly engages a threaded hole 414 in the box. Air passes through slots 314 into the box and into the receptacle 410 in the space 404 below the filter paper 402 then through the filter paper 402 into a space 416 above the filter paper 402 and then exits the space 416 above the filter paper through a flexible tube 418 to the carburetor 126. Any dust contained in the air entering the box 400 is blocked by the filter paper 402.

A combination of two sytems have been proposed to shake any dust within the filter paper 402 off the filter paper 402 into the drawer 408 so that the drawer 408 an be removed for emptying.

The first system is very similar to that disclosed in the first embodiment described above and comprises a rubber flap 420 which is attached to the front end of the drawer 408. As the drawer 408 is inserted into the box 400 the rubber flap 420 engages with the pleated filter paper 402. As the drawer 408 slides into the box 400 the rubber flap 420 successively hits the base of each pleat causing any dust on the pleats to be knocked off and into the drawer 408. As such the action of inserting or removing the drawer 408 into the box 400 causes dust on the filter paper 402 to be loosened and allowed to be removed.

The second system relies on the starter cord 422 of the start 12 for the two stroke engine 24 of the power saw. When the engine is started, the power cord 422 needs to be pulled in order to cause it to rotate. As the cord 422 is pulled, it rotates a pulley wheel 424 which causes an eccentric pin 426 to rotate about the axis 428 of the pulley 420. This causes one side of the box 400 to oscillate up and down as indicated by arrows Y. The other side of the box 400 is pivotally attached about an axis 435 to the body of the power cutter. The reciprocating motion of the box 400 causes dust in the filter 402 to be shaken off the filter paper 402 and into the drawer 408.

Each system cause dust trapped in the filter paper 402 to fall into the drawer. When the operator first starts up the power cutter, the action of pulling the starter cord cleans the filter paper 402. Then, the operator can subsequently clean the filter paper during the operation of the power cutter by inserting and removing the drawing 408.

It will be appreciated by a person skilled in the art that the two systems could be used separately, as well as in combination, a power cutter having only one or the other system.

## Claims

1. A power cutter comprising:
a housing 2;
an engine 24 mounted within the housing 2;
a support arm 7 mounted on the housing and which projects forward of the housing;
a blade mounting mechanism rotatably mounted on the end of the support arm and which is capable of being rotationally driven by the engine 24 when the engine is running;
a cutting blade having a circular central hole and which mounts on and is rotationally driven by the blade mounting mechanism;
a liquid fuel aeration mechanism 126 to generate aerated fuel for the engine;
an air intake 314 for the provision of air for the liquid fuel aeration device 126;
an air filtration mechanism 316 to filter the air drawn in from the air intake for the liquid fuel aeration mechanism;
a fuel tank 124 for providing fuel to the liquid fuel aeration mechanism; and
an exhaust 146 through which the exhaust gases generated by the operation of the engine are expelled;
wherein the blade mounting mechanism comprises:
a spindle 70 rotatably mounted on the support arm and which is capable of being driven by the engine 24,
an adaptor 90 upon which is mounted the cutting blade, which adaptor is mounted on surrounds the spindle, the adaptor 90 having along its length a plurality of radial support surfaces 98; 100 which are each concentric with the spindle 70, each having a different radius;
a clamping mechanism 96, 92,86 capable of axially and angularly locking the cutting blade to the spindle 70;
wherein, when the blade 10 is mounted on the adaptor 90, the central hole of the blade 10 mounts on a corresponding sized radial support surface 98; 100 of the adaptor 90 so that the axis of rotation of the blade 10 is substantially co-axial with that of the spindle 70.

2. A power cutter as claimed in claim 1 wherein successive radial support surfaces along the adaptor 90 increase in radius.

3. A power cutter as claimed in claim 2 wherein the cutting blade is mounted on the adaptor by the radial support surface with the smallest radius first passes through the central hole of the blade 10 followed by successive radial support surfaces of increasing radius until it engages with the corresponding sized radial support surface 98; 100.

4. A power cutter as claimed in any one of the previous claims wherein the adaptor is capable of axially sliding along the spindle.

5. A power cutter as claimed in claim 4 wherein, when the blade is mounted on the adaptor 90, the adaptor is moved by the blade to an axial position which allows the blade to be mounted on the spindle at the same axial position regardless of which radial support surface the blade is mounted upon.

6. A power cutter as claimed in any one of the previous claims wherein the adaptor is capable of sliding along the spindle from a first end position to a second end position, there being further provided a biasing force 102 to bias the adaptor 90 to the first end position.

7. A power cutter as claimed in claim 6 wherein the blade moves the adaptor against the biasing force.

8. A power cutter as claimed in either of claims 6 or 7 wherein the biasing force is generated by a helical spring which surrounds the spindle.

9. A power cutter as claimed in any one of the previous claims wherein the clamp locks the blade 10 in the same axial position on the spindle 70.

10. A power cutter as claimed in any one of the previous claims wherein the clamp comprises a first support disk 92 which is non rotatably but axially slideably mounted on the spindle 70, which engages a first side of the blade, a second support disk 86 which is non rotatably but axially slideably mounted on the spindle 70, which engages a second side of the blade and a flanged nut which, when screwed on to the spindle 70, sandwiches the blade between the first and second support disks.

11. A power cutter as claimed in any one of the previous claims wherein the adaptor capable of freely rotating about the spindle
